# EUROPÄISCHE PATENTANMELDUNG

(11) **EP 1 674 471 A1**
(43) Veröffentlichungstag der Anmeldung: **28.06.2006**
(21) Anmeldenummer: 04030383.6
(22) Anmeldetag: 22.12.2004
(51) Int. Cl.: C07F 7/18, C07F 7/00

(54) **Stickstoffeinheiten enthaltende Organosiliciumverbindungen**

(71) Anmelder: Ciba Spezialitätenchemie Pfersee GmbH, 86462 Langweid a.L. (DE)
(72) Erfinder: Chrobaczek, Harald, Dr., 86153 Augsburg (DE); Chowdhury, Kenneth, 86163 Augsburg (DE)

(57) **Zusammenfassung**

Beschrieben werden Siliciumverbindungen, die sich erhalten lassen durch Umsetzung von Aminogruppen enthaltenden Silanen mit Silanen, welche Acrylateinhalten enthalten und gegebenenfalls weitere Umsetzung der erhaltenen Produkte mit Verbindungen, welche reaktive Gruppen enthalten. Die Siliciumverbindungen können zur Behandlung von Fasermaterialien wie z.B. Geweben aus Cellulosematerialien verwendet werden. Eine andere Verwendungsmöglichkeit besteht darin, diese Siliciumverbindungen mit Polyorganosiloxanen in einer Äquilibrierungs- und/oder Kondensationsreaktion umzusetzen.

## Beschreibung

Die Erfindung betrifft spezielle Siliciumverbindungen, welche aus funktionellen Silanen hergestellt werden können. Sie betrifft ferner Produkte, welche aus diesen Siliciumverbindungen durch Umsetzung mit Verbindungen, welche reaktive Gruppen enthalten, hergestellt werden können. Die Erfindung betrifft außerdem die Verwendung der genannten Produkte zur Behandlung von Fasermaterialien oder zur Umsetzung mit Polyorganosiloxanen.

Es ist bekannt, Fasermaterialien, welche Cellulosefasern enthalten, mit sogenannten Cellulosevernetzern zu behandeln, um das Knitterverhalten textiler Artikel positiv zu beeinflussen. Zu diesem Zweck wurden bereits Silane mit reaktiven Gruppen verwendet. Dies geht beispielsweise aus der US 3 055 774 und der EP-A 563 961 hervor. Ferner beschreibt die EP-A 401 668 die Umsetzung von reaktiven Siliciumverbindungen mit Celluloseprodukten.
Die WO 02/070528 beschreibt die Umesterung von Alkoxysilanen mittels Alkoholen.

Die Siliciumverbindungen, welche aus dem Stand der Technik für die Behandlung von Cellulose enthaltenden Fasermaterialien bekannt sind, sind noch nicht optimal, was chemische Reaktivität gegenüber Cellulose und Niveau der bei textilen Flächengebilden erzielten Effekte betrifft.

Die Aufgabe, welche der vorliegenden Erfindung zugrunde lag, bestand darin, Siliciumverbindungen zu Verfügung zu stellen, mit denen sich eine hochwirksame Vernetzung von textilen Flächengebilden, die zu einem wesentlichen Anteil aus Cellulosefasern bestehen, durchführen lässt und mit denen Polyorganosiloxane umgesetzt werden können, um so modifizierte Polyorganosiloxane zu erhalten, mit welchen sich gute Permanenz derjenigen Effekte erzielen lässt, die bei Behandlung von textilen Flächengebilden mit diesen modifizierten Polyorganosiloxanen erhalten werden.

Die Aufgabe wurde gelöst durch Siliciumverbindungen, die hergestellt werden können, indem man ein Silan der Formel (I) oder ein Gemisch von Silanen der Formel (I) 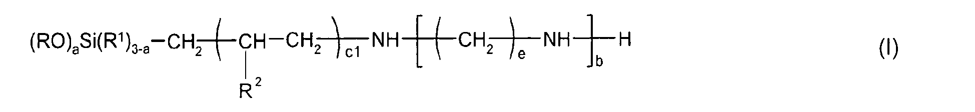 mit einem Silan der Formel (II) oder einem Gemisch von Silanen der Formel (II) umsetzt 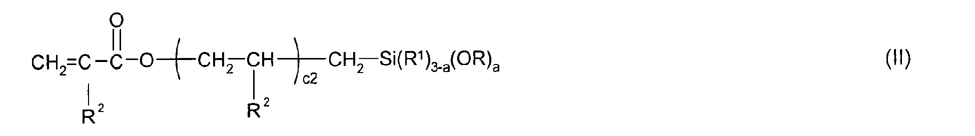 wobei das molare Verhältnis von eingesetzten Silanen der Formel (I) zu eingesetzten Silanen der Formel (II) 5:1 bis 1:5 beträgt, vorzugsweise 3:1 bis 1:2,
und gegebenenfalls weiterer Umsetzung der erhaltenen Produkte mit Verbindungen, die ausgewählt sind aus Formaldehyd, Schwefelsäure, Mischungen aus Essigsäure und
niedrigmolekularen Alkoholen, und Verbindungen der Formeln (III), (IV), (V), (VI), (VII) und (VIII)
wobei im Fall der Umsetzung mit Formaldehyd die entstehenden -CH₂OH-Reste mit einem einwertigen oder mehrwertigen aliphatischen Alkohol mit 1 bis 6 Kohlenstoffatomen verethert worden sein können,

Ar―SO₃― R³ (III)

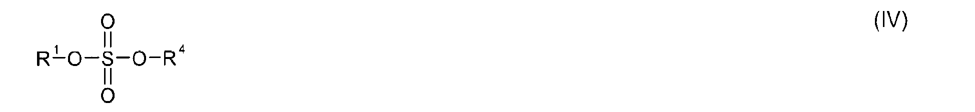

R⁵―Hal (V)

R―OH (VI)

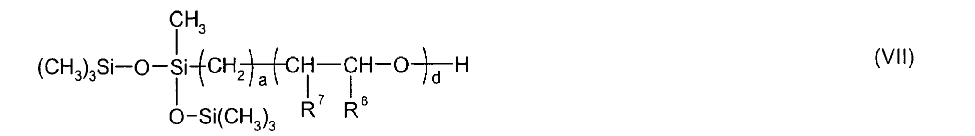

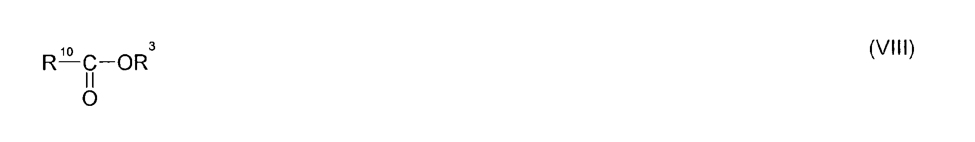

worin
alle Reste R¹ unabhängig voneinander für einen Methylrest, einen Ethylrest oder einen unsubstituierten Phenylrest stehen,
alle Reste R² unabhängig voneinander für H oder -CH₃ stehen,
der Rest R³ für Wasserstoff oder einen linearen oder verzweigten Alkylrest mit 1 bis 14 Kohlenstoffatomen steht,
der Rest R⁴ für H oder für R¹ steht,
der Rest R⁵ für einen Rest R³ steht, der nicht für Wasserstoff steht, oder für einen Rest R³, der nicht für Wasserstoff steht und in dem ein Wasserstoffatom durch den einwertigen, von Ethylenoxid abgeleiteten Rest ersetzt ist,
alle Reste R unabhängig voneinander für einen Rest der Formel (IX) oder der Formel (X) stehen, 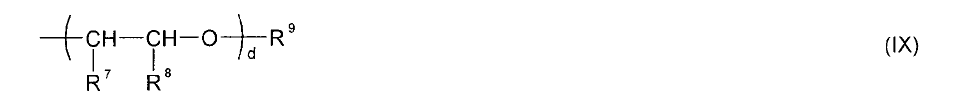 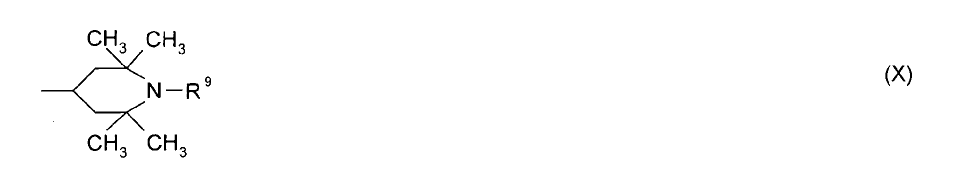 worin einer der Reste R⁷ und R⁸ für Wasserstoff und der andere für Wasserstoff oder eine Methylgruppe steht,
der Rest R⁹ für Wasserstoff oder einen Alkylrest mit 1 bis 16 Kohlenstoffatomen steht,
oder wobei alle Reste R unabhängig voneinander für Wasserstoff oder für einen linearen oder verzweigten Alkylrest mit 1 bis 18 Kohlenstoffatomen stehen, der eine, zwei oder drei Alkoxygruppen, insbesondere Methoxygruppen oder Ethoxygruppen als Substituenten aufweisen kann,
oder wobei die Reste R für einen Rest der Formel (XI) stehen 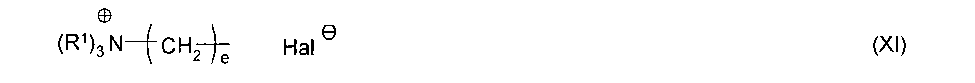 wobei R¹⁰ für einen linearen oder verzweigten Alkylrest mit 1 bis 4 Kohlenstoffatomen steht,
wobei R¹⁰ bevorzugt für eine Methyl- oder eine Ethylgruppe steht, oder
wobei R¹⁰ für Ar oder für Ar-CH₂- steht,
worin e eine Zahl von 2 bis 6 ist,
Hal für Cl oder Br steht,
Ar für den unsubstituierten Phenylrest oder einen unsubstituierten Naphthylrest steht oder für einen Phenylrest, in dem ein oder zwei Wasserstoffatome durch einen Alkylrest mit 1 bis 4 Kohlenstoffatomen substituiert sind,
a den Wert 1, 2 oder 3 besitzt
b den Wert 0, 1 oder 2 besitzt
c1 und c2 unabhängig voneinander den Wert 0 oder 1 besitzen
d eine Zahl von 1 bis 20 ist.

Soweit nachfolgend von "erfindungsgemäßen Siliciumverbindungen" die Rede ist, sind diese oben genannten und unten näher beschriebenen Produkte gemeint, d.h. "erfindungsgemäße Siliciumverbindungen" können Produkte sein, welche durch Umsetzung eines Silans der Formel (I) oder eines Gemischs solcher Silane mit einem Silan der Formel (II) oder mit einem Gemisch solcher Silane in dem genannten molaren Verhältnis entstehen und die nicht weiter mit anderen Produkten umgesetzt werden. Der Ausdruck "erfindungsgemäße Siliciumverbindungen" umfasst aber auch Produkte, die durch weitere Umsetzung der primär aus Formel (I) und Formel (II) gebildeten Siliciumverbindungen mit Formaldehyd, Schwefelsäure, Mischungen aus Essigsäure und niedrigmolekularen Alkoholen oder durch weitere Umsetzung mit Verbindungen der Formeln (III) bis (VIII) gebildet werden.

Die erfindungsgemäßen Siliciumverbindungen weisen eine Reihe von vorteilhaften Eigenschaften auf:
1. Sie besitzen mehrere reaktive Zentren, welche in Form von Alkoxy-, Acyloxy- und/oder Aminogruppen vorliegen, und besitzen daher hohe Reaktivität gegenüber cellulosischen Hydroxygruppen. Sie lassen sich daher zur hocheffektiven Vernetzung textiler Flächengebilde verwenden, welche Cellulosefasern enthalten, z.B. zu einem Anteil von 50 bis 100 Gew. %. Die Cellulosefasern können hierbei im Gemisch mit Polyester-, Polyamid- oder Polypropylenfasern vorliegen. Die Fasermaterialien sind hierbei bevorzugt textile Flächengebilde in Form von Geweben, Maschenwaren oder nonwovens.
   Erfindungsgemäße Siliciumverbindungen können auch zur Behandlung cellulosefreier oder cellulosearmer Fasermaterialien verwendet werden. Als Fasermaterialien kommen wiederum bevorzugt textile Flächengebilde in Form von Geweben, Maschenwaren oder nonwovens aus Polyester-, Polyamid- oder Propylenfasern oder Mischungen solcher Fasern in Betracht. Auch Glasfaserartikel oder andere Artikel aus Glas lassen sich vorteilhaft mit erfindungsgemäßen Siliciumverbindungen behandeln.
   Das Behandeln der Fasermaterialien in Form textiler Flächengebilde kann nach allgemein bekannten Methoden erfolgen. Gut geeignet beispielsweise ist ein Verfahren, bei dem das textile Flächengebilde durch ein Bad geführt, anschließend abgequetscht, bei 90 - 110°C 5 bis 20 Minuten getrocknet und gegebenenfalls bei einer Temperatur im Bereich von 120°C bis 160°C kondensiert wird. Solche Verfahren sind unter anderem die bekannten Foulard-Prozesse. Die erfindungsgemäßen Siliciumverbindungen sowie die unten bei Punkt 2 beschriebenen modifizierten Polyorganosiloxane lassen sich jedoch auch vorteilhaft zur Beschichtung textiler Flächengebilde verwenden. Die Beschichtung kann nach allgemein bekannten Methoden erfolgen.
2. Die erfindungsgemäßen Siliciumverbindungen können wegen des Vorhandenseins reaktiver Gruppen, z.B. -OH- oder -NH-Gruppen, dazu verwendet werden, bekannte Polyorganosiloxane zu modifizieren. Hierzu werden die erfindungsgemäßen Siliciumverbindungen in einer Äquilibrierungs- oder Kondensationsreaktion umgesetzt. Äquilibrierungsreaktionen und Kondensationsreaktionen an Siloxanen sind aus dem Stand der Technik bekannt. Bei der Äquilibrierung, welche im Normalfall in Anwesenheit basischer Katalysatoren bei einer Temperatur im Bereich von 60 bis 140°C verläuft, werden niedrigmolekulare Siliciumverbindungen, z.B. Silane, welche zwei oder mehr Alkoxygruppen direkt an ein Si-Atom gebunden enthalten, mit Polyorganosiloxanen umgesetzt. Hierbei erfolgt ein Einbau der aus der niedrigmolekularen Siliciumverbindung stammenden Einheit -O-Si-O- in die Polysiloxankette. Wenn eine solche Äquilibrierungsreaktion zwischen erfindungsgemäßen Siliciumverbindungen und Polyorganosiloxanen durchgeführt werden soll, verwendet man als Polyorganosiloxan bevorzugt ein Polyorganosiloxan, das Trimethylsilyl - (CH₃)₃Si-O- oder Hydroxydimethyl-silyl-(HO(CH₃)₂Si-O-) Endgruppen aufweist. Die Polysiloxankette kann hierbei aus sich wiederholenden -(CH₃)₂Si-O- Einheiten bestehen, wovon in einer oder mehreren eine Methylgruppe durch eine funktionelle Gruppe substituiert sein kann, z.B. einen Rest, der eine oder mehrere Aminogruppen enthält.
   Bei der Kondensationsreaktion, die bevorzugt in einem Temperaturbereich von 60 bis 100°C durchgeführt wird, wird eine niedrigmolekulare Siliciumverbindung, welche zwei oder mehr an ein Si-Atom gebundene Alkoxygruppen enthält, mit einem OH-Gruppen enthaltenden Polyorganosiloxan umgesetzt. Zu Beginn der Kondensationsreaktion kann Wasser anwesend sein, z.B. um die in der niedrigmolekularen Siliciumverbindung enthaltenen Alkoxygruppen zu Hydroxygruppen zu hydrolysieren. Wenn erfindungsgemäße Siliciumverbindungen für eine solche Kondensationsreaktion verwendet werden sollen, wird als Polyorganosiloxan bevorzugt ein lineares Polymer eingesetzt, welches an beiden Kettenenden Hydroxydimethylsilyl-Einheiten HO(CH₃)₂Si-O- aufweist. Innerhalb der Kette können die gleichen Einheiten vorliegen, wie sie oben für den Fall der Äquilibrierung beschrieben wurden.
   Bei den beschriebenen Äquilibrierungs- und/oder Kondensationsreaktionen können zusätzlich zu den erfindungsgemäßen Siliciumverbindungen noch Silane der Formel (XII) mitverwendet werden. 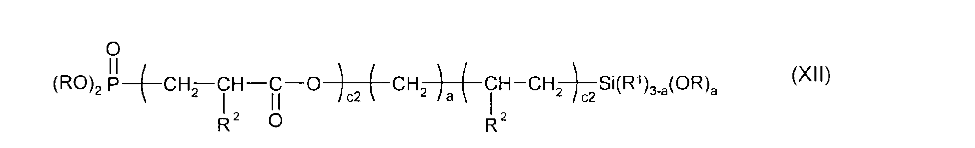 Diese Silane der Formel (XII) werden unten beschrieben.
   Macht man bei der Äquilibrierung oder Kondensation von der Mitverwendung von Silanen der Formel (XII) Gebrauch, so arbeitet man vorzugsweise mit einem molaren Verhältnis von Stickstoffatomen in den erfindungsgemäßen Silanen zu Phosphoratomen in den Silanen der Formel (XII) im Bereich vom 3:1 bis 1:1.
   Die durch Umsetzung mit erfindungsgemäßen Siliciumverbindungen modifizierten Polyorganosiloxane lassen sich ebenfalls gut zur Behandlung von Fasermaterialien in Form textiler Flächengebilde verwenden. Dabei lassen sich Effekte wie z.B. gute Antiknittereigenschaften, Weichgriff usw., mit hoher Permanenz gegenüber Waschprozessen erzielen.
   Die genannten modifizierten Polyorganosiloxane werden hierbei bevorzugt in Form wässriger Dispersionen eingesetzt. Als Dispergatoren eignen sich die aus der Silikonchemie bekannten Dispergatoren, insbesondere nichtionogene Dispergatoren wie ethoxilierte längerkettige aliphatische Alkohole.

Erfindungsgemäße Siliciumverbindungen lassen sich herstellen, indem man ein Silan der Formel (I) oder ein Gemisch von Silanen der Formel (I) 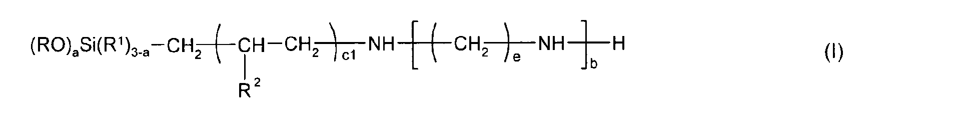 mit einem Silan der Formel (II) oder einem Gemisch von Silanen der Formel (II) umsetzt.

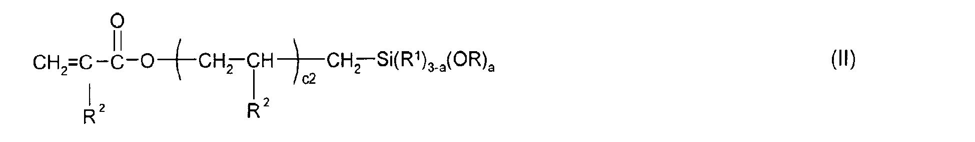

Diese Umsetzung muss in solchen Mengenverhältnissen erfolgen, dass das molare Verhältnis der Gesamtmenge an Silanen der Formel (I) zur Gesamtmenge an Silanen der Formel (II) im Bereich von 5:1 bis 1:5 liegt. Vorzugsweise liegt es im Bereich von 3:1 bis 1:2.
Die Umsetzung von Silanen der Formel (I) mit Silanen der Formel (II) wird vorzugsweise bei einer Temperatur im Bereich von 40°C bis 140°C durchgeführt. Sie kann ohne Verwendung eines Lösungsmittels stattfinden, insbesondere dann, wenn mindestens eine der Ausgangsverbindungen flüssig und gut mischbar mit den anderen Ausgangsverbindungen ist. In anderen Fällen kann ein organisches Lösungsmittel verwendet werden, in dem die Ausgangsverbindungen gut löslich sind und mit dem sie chemisch nicht reagieren. Bevorzugt ist jedoch eine Umsetzung ohne Verwendung eines Lösungsmittels.
In vielen Fällen ist es günstig, bei der Umsetzung der Silane der Formel (I) mit Silanen der Formel (II) einen Katalysator mitzuverwenden. Besonders gut geeignet als Katalysatoren sind Alkalimetallalkoholate wie Natriummethylat oder -ethylat, Zinn(IV)-verbindungen wie R₂SnO, Titanate und Vanadate der Formeln Ti(OR)₄, VO(OR)₃, wobei hier R jeweils ein Alkylrest mit 1 bis 4 Kohlenstoffatomen ist, Halogenide von Metallen wie Zinn (IV)-chlorid sowie bicyclische ggf. ungesättigte Stickstoffverbindungen, wie in der EP 933 399 A1, Seite 6, Zeilen 37-40 beschrieben.
In einer Reihe von Fällen ist es günstig, die Umsetzung von Verbindungen der Formel (I) mit Verbindungen der Formel (II) unter vermindertem Druck durchzuführen.

In den Formeln (I) und (II) bedeuten:
R: Wasserstoff oder einen linearen oder verzweigten Alkylrest mit 1 bis 18 Kohlenstoffatomen, oder einen solchen Alkylrest, der eine oder zwei oder drei Methoxygruppen oder Ethoxygruppen als Substituenten aufweist.
   oder
   einen Rest der Formel (IX) oder der Formel (X) oder der Formel (XI) 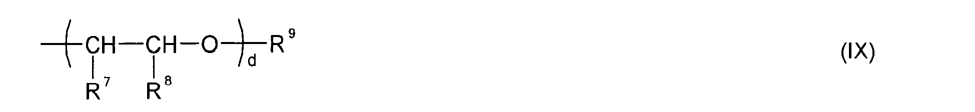 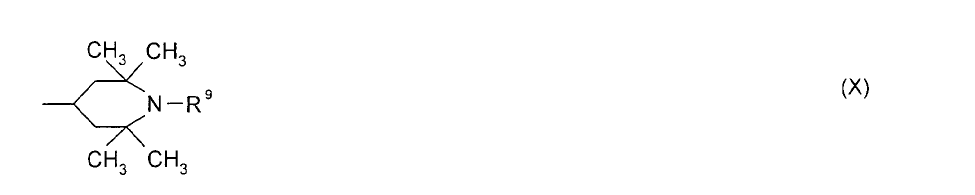 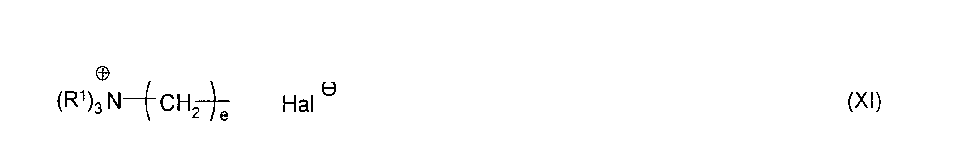
R¹: einen Methylrest, einen Ethylrest oder einen unsubstituierten Phenylrest
R²: Wasserstoff oder Methylrest
a die Zahl 1, 2 oder 3
b eine der Zahlen 0, 1 oder 2
c1 die Zahl 0 oder 1
c2 die Zahl 0 oder 1
e eine Zahl von 2 bis 6

Hierbei kann a für die verwendeten Verbindungen der Formel (I) den gleichen oder einen anderen Wert annehmen als für die verwendeten Verbindungen der Formel (II).

Es ist anzunehmen, dass die Umsetzung des Silans der Formel (I) mit dem Silan der Formel (II) über eine Michael-Addition erfolgt, wobei sich eine NH-Bindung der Formel (I) an die C=C-Doppelbindung der Formel (II) addiert.

In den Formeln (VIII), (IX) und (X) bedeuten:
einer der Reste R⁷ und R⁸ Wasserstoff und der andere Wasserstoff oder eine Methylgruppe d eine Zahl von 1 bis 20
e eine Zahl von 2 bis 6
R⁹ Wasserstoff oder einen Alkylrest mit 1 bis 4 Kohlenstoffatomen
Hal Brom oder Jod.

Silane der Formel (I) sind auf dem Markt erhältlich, zum Beispiel von den Firmen ABCR GmbH & Co. KG, Karlsruhe, DE und Brenntag Eurochem GmbH, DE (3-Aminopropyl-diethoxy-methylsilan und N-Aminoethyl-3-aminopropyl-methyl-dimethoxysilan). Ferner können solche Silane in bekannter Weise durch Addition von Alkyl-dialkoxy-hydrogensilanen an Allylhalogenid und anschließende Umsetzung mit entsprechenden Aminen hergestellt werden, oder durch Umsetzung von Alkylhydrogendihalogensilanen mit Allylchlorid, anschließende Substitution der direkt an Si gebundenen Halogenatome durch Reste OR und dann Umsetzung mit Aminen.

Silane der Formel (II) sind ebenfalls auf dem Markt erhältlich; Beispiele sind Produkte der GENIOSIL-Serie (Firma Wacker Chemie GmbH, DE), darunter GENIOSIL XL 32, oder Produkte der Firma ABCR GmbH & Co., Karlsruhe, DE.

Die erfindungsgemäßen Siliciumverbindungen, welche durch Umsetzung von Silanen der Formel (I) mit Silanen der Formel (II) hergestellt werden können, eignen sich sehr gut zur Behandlung von Fasermaterialien in Form von textilen Flächengebilden wie Geweben, Maschenwaren oder Vliesen (non-wovens). Enthalten die textilen Flächengebilde wesentliche Mengen, z.B. 50 bis 100 Gew. % an Cellulosefasern wie z.B. Baumwolle, so lässt sich mit erfindungsgemäßen Siliciumverbindungen eine hocheffektive Vernetzung von Cellulosemolekülen erreichen. Hierbei wird anschließend an die Applikation der Siliciumverbindung eine Trocknung und im Normalfall noch eine Kondensation durchgeführt, wie oben beschrieben.
Für den Fall, dass einer oder mehrere der Reste R in den Silanen der Formel (I) oder Formel (II) ein Alkylrest mit weniger als 6 Kohlenstoffatomen ist, besteht die Möglichkeit, dass die Silane der Formel (I) oder Formel (II) oder die erfindungsgemäßen Umsetzungsprodukte aus diesen beiden Silanen in wässrigen Systemen relativ schnell hydrolysieren. Daher verwendet man solche Umsetzungsprodukte, bei denen mindestens einer der anwesenden Reste weniger als 6 Kohlenstoffatome aufweist, vorzugsweise nicht in Form wässriger Systeme, sondern in Form einer Lösung in flüssigem Ammoniak zur Behandlung der textilen Flächengebilde. Die Lösung in flüssigem Ammoniak enthält dabei bevorzugt 0,05 bis 0,3, insbesondere 0,08 bis 0,15 Mol/l an Umsetzungsprodukt aus Silan der Formel (I) mit Silan der Formel (II), und die Applikation auf das textile Flächengebilde wird vorzugsweise als Badapplikation bei einer Temperatur im Bereich von -60° bis -40°C durchgeführt, z.B. mittels Foulard-Verfahren, wobei ein Katalysator mitverwendet werden kann, der ausgewählt ist aus Aminen wie Diaza-bicyclo[2.2.2]-octan oder 4-Dimethylamino-pyridin. Die Menge an zugesetztem Katalysator beträgt dabei bevorzugt 1 bis 3 Gew. %, bezogen auf die Gesamtmenge der in der ammoniakalischen Lösung anwesenden erfindungsgemäßen Siliciumverbindungen. An Stelle einer Lösung in flüssigem Ammoniak kann jedoch in vielen Fällen auch eine Lösung der erfindungsgemäßen Siliciumverbindungen in einer Mischung aus Wasser und einem niedrigmolekularen aliphatischen Alkohol eingesetzt werden, selbst wenn einer oder mehrere der Reste R in den verwendeten erfindungsgemäßen Siliciumverbindungen weniger als 6 Kohlenstoffatome aufweist. Der hierzu verwendete niedrigmolekulare Alkohol soll zu 20 bis 80 Gew. % in der Mischung aus Alkohol und Wasser vorliegen, und er enthält bevorzugt 1 bis 4 Kohlenstoffatome. Gut geeignet ist Isopropanol.
Wenn keiner der Reste R in den Silanen der Formel (I) und der Formel (II) für einen Alkylrest mit weniger als 6 Kohlenstoffatomen steht, so kann ebenfalls eine Anwendung in Form einer Lösung in flüssigem Ammoniak erfolgen. Vorzugsweise aber verwendet man in diesem Fall die erfindungsgemäßen Umsetzungsprodukte von Silanen der Formel (I) mit Silanen der Formel (II) u.a. aus Kostengründen und wegen der einfacheren Handhabung in Form einer wässrigen Lösung oder Dispersion. Zur Dispergierung in Wasser eignen sich hierbei übliche nichtionogene Dispergatoren wie ethoxilierte längerkettige Alkohole oder kationische Dispergatoren wie quaternäre Ammoniumsalze. Die wässrigen Lösungen oder Dispersionen werden ebenfalls bevorzugt mittels eines Bades, z.B. über Foulardierung, eingesetzt und enthalten vorzugsweise 0,05 bis 0,3, insbesondere 0,08 bis 0,15 Mol/l an Umsetzungsprodukt aus den entsprechenden Silanen.

Zu den erfindungsgemäßen Siliciumverbindungen zählen nicht nur solche, die sich durch die beschriebene Umsetzung von Silanen der Formel (I) mit Silanen der Formel (II) erhalten lassen. Vielmehr sind Gegenstand der vorliegenden Erfindung auch Siliciumverbindungen, die sich aus den genannten Umsetzungsprodukten durch weitere Umsetzung mit bestimmten Produkten erhalten lassen. Diese bestimmten Produkte sind ausgewählt aus Formaldehyd, Schwefelsäure, Mischungen aus Essigsäure und niedrigmolekularen Alkoholen, sowie Verbindungen der Formeln (III), (IV), (V), (VI), (VII) und (VIII)

Ar―SO₃― R³ (III)

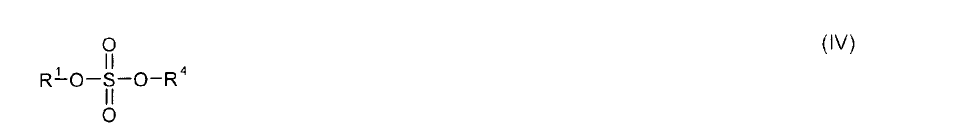

R⁵―Hal (V)

R―OH (VI)

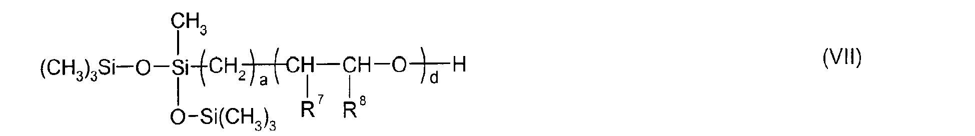

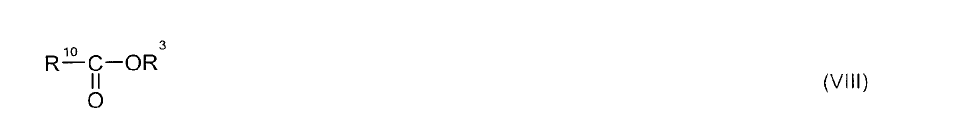

Im Fall der Umsetzung mit Formaldehyd können die entstehenden -CH₂OH-Reste mit einem einwertigen oder mehrwertigen aliphatischen Alkohol mit 1 bis 6 Kohlenstoffatomen anschließend verethert werden. Der niedrigmolekulare Alkohol, der als Gemisch mit Essigsäure verwendet werden kann, ist ebenfalls ein einwertiger oder mehrwertiger aliphatischer Alkohol mit 1 bis 6 Kohlenstoffatomen.

In den Formeln (III) bis (VIII) bedeuten
R³: Wasserstoff oder einen linearen oder verzweigten Alkylrest mit 1 bis 14 Kohlenstoffatomen. Bevorzugt ist R³ ein Alkylrest mit 1 bis 8 Kohlenstoffatomen.
R⁴: Wasserstoff oder R¹
R⁵: gleiche Bedeutung wie R³, ausgenommen Wasserstoff, oder ein Rest R³ der nicht für Wasserstoff steht und in dem ein Wasserstoffatom durch den einwertigen Rest ersetzt ist, der sich von Ethylenoxid durch Entfernung eines Wasserstoffatoms ableitet,
R¹⁰ einen linearen oder verzweigten Alkylrest mit 1 bis 6 Kohlenstoffatomen oder Ar- oder Ar-CH₂-, wobei R¹⁰ bevorzugt für einen Methyl- oder Ethylrest steht,
Ar: einen einwertigen Rest, der sich von Benzol, Toluol oder Naphthalin oder Dialkylbenzol durch Entfernung eines Wasserstoffatoms ableitet, wobei der Naphthylrest der 1-Naphthyl- oder 2-Naphthylrest sein kann und wobei unter Dialkylbenzol ein durch 2 Alkylgruppen mit je 1 bis 4 Kohlenstoffatomen substituiertes Benzol zu verstehen ist.

In den Formeln (III) bis (VIII) besitzen ferner R¹, R⁷, R⁸, R⁹, a und d die oben und in Anspruch 1 genannten Bedeutungen.

In den Verbindungen der Formel (III) ist der Rest Ar direkt an das Schwefelatom gebunden, diese Verbindungen sind also Sulfonsäuren oder Derivate davon; sie sind nicht Sulfite oder Hydrogensulfite.

Die beschriebenen weiteren Umsetzungen der Produkte, die durch Reaktion von Verbindungen der Formel (I) mit Verbindungen der Formel (II) entstehen, lassen sich ebenfalls vorteilhaft unter Verwendung eines Katalysators, insbesondere Tetraalkyltitanat, im Fall eines Austauschs von Alkoxy-Resten, d.h. z.B. im Fall einer Umsetzung mit einer Verbindung der Formel (VI) durchführen. Vor allem die weitere Umsetzung mit Verbindungen der Formel (VI) führt zu technisch hervorragenden Produkten. Gut geeignete Verbindungen der Formel (VI) sind hierbei niedrigmolekulare einwertige Alkohole mit 1 bis 4 Kohlenstoffatomen.
Nach der Umsetzung mit diesen Alkoholen, welche bevorzugt im Überschuß verwendet werden, wird vorzugsweise Wasser und ein wenig mit Wasser mischbares organisches Lösungsmittel und gegebenenfalls Essigsäure zugesetzt und aus diesem 2-phasigen Gemisch die erfindungsgemäße Siliciumverbindung isoliert.

Nach der genannten Umsetzung mit einem niedrigmolekularen einwertigen Alkohol kann man auch so vorgehen, dass man das entstandene Umsetzungsprodukt mit einem Polysiloxan vermischt, das Polyoxyalkylengruppen enthält und dieses Gemisch in Wasser einrührt.

Die Mengenverhältnisse, welche bei der Umsetzung der Produkte, die durch Reaktion von Silanen der Formel (I) mit Silanen der Formel (II) gebildet werden, mit Verbindungen der Formeln (III) bis (V) eingesetzt werden, können äquivalenten Mengen entsprechen, sodaß alle Stickstoffatome, die nach der Umsetzung der Verbindung von Formel (I) mit der Verbindung von Formel (II) vorhanden sind, vollständig mit einer Verbindung der Formel (III) bis (V) reagieren oder die Mengen an Verbindungen der Formeln (III) bis (V) können geringer sein als äquivalenten Mengen entspricht. Unter dem Ausdruck "vollständig" ist hierbei zu verstehen, dass nach der Reaktion an keines der Stickstoffatome mehr ein Wasserstoff-Atom gebunden ist. Im Fall von Alkylierungsreaktionen können die Mengenverhältnisse auch so gewählt werden, dass alle oder ein Teil der Stickstoffatome quaternisiert werden.
Wenn die Produkte, die bei der Umsetzung von Verbindungen der Formel (I) mit Verbindungen der Formel (II) entstehen, mit Produkten der Formel (VI), der Formel (VII) oder der Formel (VIII) weiter umgesetzt werden oder mit Produkten der Formel (III), oder (IV) in denen R³=H bzw. R⁴=H ist, dann können die Mengen so gewählt werden, dass alle Reste OR, die in den Umsetzungensprodukten von Verbindungen der Formel (I) mit Verbindungen der Formel (II) vorliegen, durch andere Reste substituiert werden. Es können aber auch geringere Mengen verwendet werden, sodaß nur teilweise eine solche Substitution stattfindet.
Die genannten Umsetzungen lassen sich nach Methoden durchführen, welche aus der organischen Chemie bekannt sind.

Es wird angenommen, dass bei der Umsetzung mit einer Verbindung der Formel (III), der Formel (IV) oder der Formel (V) eine Alkylierung oder Quaternisierung eines oder mehrerer Stickstoffatome resultiert, die in den Umsetzungsprodukten der Silane der Formel (I) mit Silanen der Formel (II) vorliegen.
Ferner wird angenommen, dass bei der Umsetzung mit einer Verbindung der Formel (VI) ein Austausch eines oder mehrerer Reste R, die an endständige Siliciumatome gebunden sind, durch einen oder mehrere andere Reste R resultiert. Dadurch können beispielsweise kurzkettige Reste R, die in Silanen der Formel (I) und/oder der Formel (II) vorgelegen haben, durch längerkettige Reste R ersetzt werden. Diese Substitution lässt sich durch Säuren oder Basen, gegebenenfalls auch durch Enzyme, katalysieren. Die weitere Umsetzung der Produkte, welche bei der Reaktion von Silanen der Formel (I) mit Silanen der Formel (II) entstehen, mit Verbindungen der Formel (VI) lässt sich außerdem vorteilhaft katalysieren durch Titan- oder Vanadinverbindungen wie Ti(OA)₄, VO(OA)₃ und (A)₂SnO worin A für den n-Butyl oder den Isopropylrest steht. Weiterhin ist als Katalysator für diese Umsetzung gut geeignet Zirkoniumtetraacetylacetonat, also die Verbindung ZrX₄ worin X für das Anion der Enolform des Acetylacetons steht. So können erfindungsgemäße Siliciumverbindungen erhalten werden, die nicht in Form von Lösungen in flüssigem Ammoniak zur Cellulosevernetzung verwendet werden müssen, sondern die in Form von wässrigen Lösungen oder Dispersionen eingesetzt werden können, weil keine kurzkettigen Alkoxyreste an die Siliciumatome gebunden sind, also keine Alkoxyreste mit weniger als 6 Kohlenstoffatomen. Die weitere Umsetzung der Produkte, die durch Reaktion von Verbindungen der Formel (I) mit Verbindungen der Formel (II) entstehen, mit Verbindungen der Formel (VI) kann, wenn R in Formel (VI) für einen unsubstituierten Alkylrest steht, nach den in WO 02/070528 und in J. Gulinski et al, Applied Organometallic Chemistry 2001, 15, Seiten 649 - 657 ("Synthesis of organofunctional silanes with sterically hindered substituents at silicon atoms") beschriebenen Methoden durchgeführt werden.
Produkte der Formel (VII) sind auf dem Markt erhältlich, z.B. von der Firma Goldschmidt, Essen, DE unter der Bezeichnung TEGOPREN 5878.

Erfindungsgemäße Siliciumverbindungen und die erfindungsgemäßen modifizierten Polyorganosiloxane können, wie oben erwähnt, zur Behandlung textiler Flächengebilde aus Fasermaterialien verwendet werden. Hierfür werden sie bevorzugt in Form von Lösungen in flüssigem Ammoniak oder in Form von wässrigen Lösungen oder Dispersionen eingesetzt. Die Lösungen oder Dispersionen können weitere Zusätze enthalten, wie sie auf dem Gebiet der Textilausrüstung bzw. -veredlung bekannt sind. Beispiele für solche Zusätze sind Weichgriffmittel wie beispielsweise aminofunktionelle Polyorganosiloxane oder dispergierbare Wachse, Flammschutzmittel wie z.B. Phosphor- oder Stickstoffverbindungen sowie Polymere, welche Perfluoralkylreste enthalten, zur Erzielung wasser- und ölabweisender Eigenschaften auf den Textilien.
In Fällen, wo bei der Behandlung der Fasermaterialien flammhemmende Wirkung erzielt werden soll, ist es günstig, die erfindungsgemäßen Siliciumverbindungen in Kombination mit Phosphonoeinheiten enthaltenden Silanen zu verwenden. Gut geeignet hierfür sind Silane der Formel (XII).

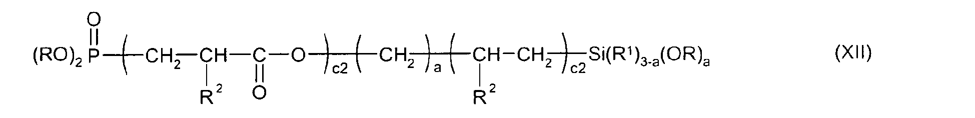

In dieser Formel besitzen R, R¹, R², a, c2 und e die oben und in Anspruch 1 genannten Bedeutungen.
Verbindungen der Formel (XII) lassen sich herstellen, indem man Dialkylphosphite bei 0°C mit metallischem Natrium umsetzt und das gebildete Produkt mit Silanen der Formel (II) umsetzt. Diese Synthese geht aus dem Chemical-Abstracts-Zitat mit der Accession Number (AN) 109:231291 = Zusammenfassung der JP-Offenlegungsschrift 63/051393 hervor.
Verwendet man zur Behandlung textiler Flächengebilde neben erfindungsgemäßen Siliciumverbindungen noch zusätzlich Phosphonoeinheiten enthaltende Silane, z.B. solche der Formel (XI), so besteht eine bevorzugte Ausführungsform darin, dass die Siliciumverbindungen und die Phosphonoeinheiten enthaltenden Silane in solchen Mengenverhältnissen eingesetzt werden, dass das molare Verhältnis von Stickstoffatomen in den Siliciumverbindungen gemäß einem oder mehreren der Ansprüche 1 bis 5 zu Phosphoratomen in den Silanen der Formel (XII) im Bereich von 1:1 bis 3:1 liegt.
Auch die erfindungsgemäßen modifizierten Polyorganosiloxane, die oben beschrieben wurden und die sich durch Umsetzung von erfindungsgemäßen Siliciumverbindungen mit Polyorganosiloxanen erhalten lassen, können vorteilhaft in Kombination mit Silanen der Formel (XII) verwendet werden. Diese Phosphonoeinheiten enthaltenden Silane der Formel (XII) können auch in diesem Fall flammhemmende Eigenschaften der behandelten textilen Flächengebilde bewirken. Macht man von dieser Möglichkeit Gebrauch, so setzt man die modifizierten Polyorganosiloxane und die Silane der Formel (XII) bevorzugt in solchen Mengenverhältnissen ein, dass in der Kombination der genannten Produkte ein molares Verhältnis von Stickstoffatomen zu Phosphoratomen im Bereich von 3:1 bis 1:1 vorliegt.
Es ist aber auch gut möglich, bereits bei der Synthese der modifizierten Polyorganosiloxane zusätzlich Silane der Formel (XII) mitzuverwenden, die sich dann an der oben beschriebenen Äquilibrierungs- und/oder Kondensationsreaktion beteiligen. In diesem Fall wird die Menge an zusätzlich verwendetem Silan der Formel (XII) vorzugsweise so bemessen, dass ein molares Verhältnis von Stickstoffatomen zu Phosphoratomen im Bereich von 3:1 bis 1:1 vorliegt.

Eine weitere Verwendungsmöglichkeit erfindungsgemäßer Siliciumverbindungen ist der Einsatz als Klebstoffe, z.B. für Keramikartikel, wobei jedoch nicht alle erfindungsgemäßen Produkte für diesen Einsatzzweck geeignet sind.
Die Erfindung wird nunmehr durch Ausführungsbeispiele veranschaulicht.

### Beispiel 1

In einem Reaktionsgefäß, ausgestattet mit Heizvorrichtung, Rührer und Rückflusskühler wurden 10 g eines Silans gemäß Formel (I) von Anspruch 1 mit
b=1, e=2, c1=1, a=2, R=CH₃, R¹=CH₃
und
9,95 g eines Silans gemäß Formel (II) von Anspruch 1 mit R²=CH₃, R=CH₃, R¹=CH₃, a=2, c2=0 miteinander vermischt, auf 60°C erwärmt und 4 Stunden unter Rühren bei dieser Temperatur gehalten. Nach dem Abkühlen wurde eine farblose, transparente Flüssigkeit erhalten.

### Beispiel 2

Beispiel 1 wurde mit folgenden Unterschieden wiederholt: Es wurden 9,4 g des obengenannten Silans der Formel (I) verwendet. Es wurden 10,6 g eines anderen Silans der Formel (II) als in Beispiel 1 verwendet, nämlich eines Silans mit c2=1, die übrigen Parameter des Silans waren die gleichen wie in Beispiel 1. Außerdem wurden zu dem Gemisch der Silane 1 g einer
30 %igen Lösung von Natriummethylat in Methanol gegeben.
Es resultierte ebenfalls eine farblose, transparente Flüssigkeit.

### Beispiel 3

Es wurde wie in Beispiel 1 gearbeitet, jedoch mit Verwendung eines anderen Silans der Formel (I), nämlich eines Silans mit R= -CH₂-CH₃, b=0. Die übrigen Parameter dieses Silans der Formel (I) waren die gleichen wie in Beispiel 1.
Von diesem Silan der Formel (I) wurden 9,7 g mit 10,35 g des Silans der Formel (II) gemäß Beispiel 1 gemischt.
Das erhaltene Produkt war eine farblose, klare Flüssigkeit.

### Beispiel 4

Beispiel 3 wurde wiederholt, wobei jedoch an Stelle des dort genannten Silans der Formel (II) das Silan der Formel (II) gemäß Beispiel 2 verwendet wurde.
Es wurden hierbei 9,0 g Silan der Formel (I) mit 10,9 g Silan der Formel (II) gemischt.
Es wurde auch hier eine klare, farblose Flüssigkeit erhalten.

### Beispiel 5

Beispiel 3 wurde wiederholt, wobei 19,3 g Silan der Formel (I) und 20,6 g Silan der Formel (II) verwendet wurden. Außerdem wurde während der 4 Stunden 1 ml Natriummethylatlösung (30 % in Methanol) zugetropft.
Es resultierte eine gelbe, trübe Flüssigkeit.

### Beispiel 6

Beispiel 1 wurde wiederholt, jedoch unter Verwendung von 20,4 g des Silans der Formel (II) und 15,1 g eines Silans der Formel (I). Dieses Silan der Formel (I) unterschied sich von dem in Beispiel 1 verwendeten. Es war charakterisiert durch
R=CH₃, a=3, c1=0, b=0
Man erhielt eine klare, farblose Flüssigkeit.

### Beispiel 7

Beispiel 6 wurde mit 12,2 g Silan der Formel (I) wiederholt, wobei 17,8 g eines Silans der Formel (II) verwendet wurden. Dieses Silan der Formel (II) war charakterisiert durch
R=CH₃, a=3, c2=0, R²=CH₃
Man erhielt eine klare, farblose Flüssigkeit.

### Beispiel 8

Weitere Umsetzung mit einer Verbindung der Formel (VI)
76,5 g des gemäß Beispiel 4 erhaltenen Produkts und 24 g Isopropanol (= Produkt der Formel (VI)) miteinander vermischt. Zu der Mischung gab man 0,25 g Tetrakis-n-butyl-orthotitanat (Katalysator). Das erhaltene Gemisch wurde 4 Stunden bei 70°C unter vermindertem Druck gerührt.
Man erhielt eine klare, farblose Flüssigkeit.

### Beispiel 9

Umsetzung einer Siliciumverbindung, die aus Silan der Formel (I) und Silan der Formel (II) erhalten wurde, mit Polyorganosiloxan.
Dieses Beispiel fällt unter Anspruch 13.
2,6 g des gemäß Beispiel 2 erhaltenen Produkts,
2,4 g des Silans der Formel (II), das in Beispiel 2 verwendet wurde,
0,5 g des Silans der Formel (II), das in Beispiel 1 verwendet wurde,
94,3 g α, ω-Dihydroxypolydimethylsiloxans (CT 101 M der Firma Wacker, DE) und
0,2 g 30 %iger methanolischer Lösung von Natriummethylat (Katalysator)
   wurden miteinander vermischt und unter Sticktoffatmosphäre, unter Rühren auf 90°C erwärmt und 5 Minuten bei 90°C unter Rückfluß gehalten. Anschließend wurde unter vermindertem Druck (100 mbar) destilliert, nochmals 0,1 g der Katalysatorlösung zugegeben und erneut destilliert (ca. 3 Stunden), bis eine transparente Flüssigkeit erhalten wurde, deren Viskosität bei 20°C einen Wert von etwa 12.000 mPa.s besaß.

### Beispiel 10

Behandlung eines Fasermaterials mit einer erfindungsgemäßen Zusammensetzung
a) Herstellung einer erfindungsgemäßen Zusammensetzung
   52 g des Produkts, das gemäß Beispiel 6 erhalten wurde, 48 g Isopropanol und 0,5 g Tetrakis-n-butyl-orthotitanat (Katalysator) wurden miteinander vermischt. Isopropanol fungierte dabei als Verbindung der Formel (VI). Es bildete sich eine farblose, transparente Lösung. Diese wurde 4 Stunden unter Rückfluß und unter Rühren bei 80°C gehalten. Wiederum resultierte eine farblose, transparente Lösung. Zu 32 g dieser Lösung wurden 19 g Methyl-isobutyl-keton (MIBK) gegeben. Es bildete sich sofort eine transparente Lösung. Zu dieser gab man unter starkem Rühren 45 g Wasser ung 3 g 60 %iger Essigsäure. Das erhaltene Gemisch wurde 2 Stunden bei Raumtemperatur gerührt. Es bildete sich ein zweiphasiges Gemisch, das mittels Scheidetrichter getrennt wurde. Die untere, wässrige, Phase wurde für die Behandlung von Fasermaterial weiterverwendet.
b) Behandlung eines Baumwollgewebes
   Eine Flotte wurde hergestellt, welche pro Liter
   360 g der unteren (wässrigen) Phase von Beispiel 10a
   1 ml 60 %ige Essigsäure
   2 g Katalysator (Diaza-bicyclo[2.2.2]-octan)
   enthielt.

Mit dieser Flotte wurde ein Gewebe aus 100 % Baumwolle mittels eines Foulard-Prozesses behandelt. Nach der Applikation der Behandlungsflüssigkeit wurde das Gewebe 10 Minuten bei 110°C getrocknet und anschließend 5 Minuten bei 150°C kondensiert.

## Patentansprüche

1. Siliciumverbindungen, herstellbar **dadurch**, dass man ein Silan der Formel (I) oder ein Gemisch von Silanen der Formel (I) 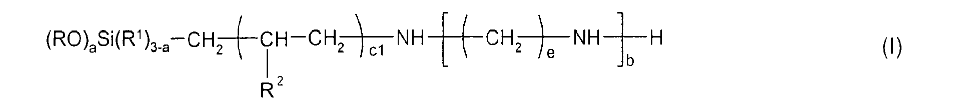 mit einem Silan der Formel (II) oder einem Gemisch von Silanen der Formel (II) umsetzt 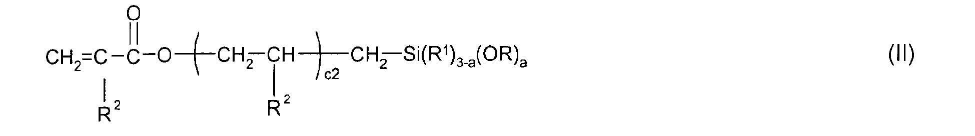 wobei das molare Verhältnis von eingesetzten Silanen der Formel (I) zu eingesetzten Silanen der Formel (II) 5:1 bis 1:5 beträgt, vorzugsweise 3:1 bis 1:2,
und gegebenenfalls weiterer Umsetzung der erhaltenen Produkte mit Verbindungen, die ausgewählt sind aus Formaldehyd, Schwefelsäure, Mischungen aus Essigsäure und niedrigmolekularen Alkoholen, und Verbindungen der Formeln (III), (IV), (V), (VI), (VII) und
(VIII) wobei im Fall der Umsetzung mit Formaldehyd die entstehenden -CH₂OH-Reste mit einem einwertigen oder mehrwertigen aliphatischen Alkohol mit 1 bis 6 Kohlenstoffatomen verethert worden sein können,
Ar―SO₃― R³ (III) 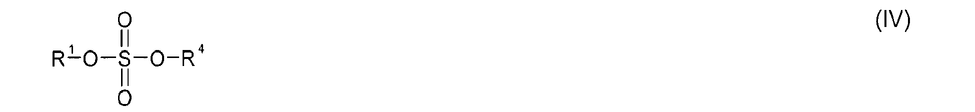
R⁵―Hal (V)
R―OH (VI) 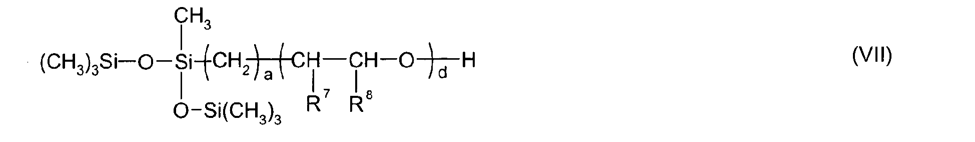 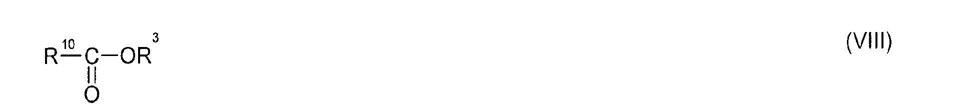
worin
alle Reste R¹ unabhängig voneinander für einen Methylrest, einen Ethylrest oder einen unsubstituierten Phenylrest stehen,
alle Reste R² unabhängig voneinander für H oder -CH₃ stehen,
der Rest R³ für Wasserstoff oder einen linearen oder verzweigten Alkylrest mit 1 bis 14 Kohlenstoffatomen steht,
der Rest R⁴ für H oder für R¹ steht,
der Rest R⁵ für einen Rest R³ steht, der nicht für Wasserstoff steht, oder für einen Rest R³,
der nicht für Wasserstoff steht und in dem ein Wasserstoffatom durch den einwertigen, von Ethylenoxid abgeleiteten Rest ersetzt ist,
alle Reste R unabhängig voneinander für einen Rest der Formel (IX) oder der Formel (X) stehen, 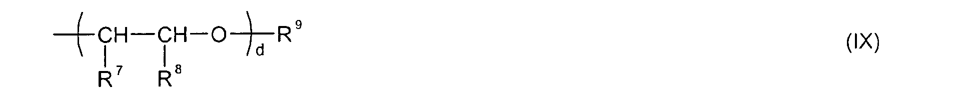 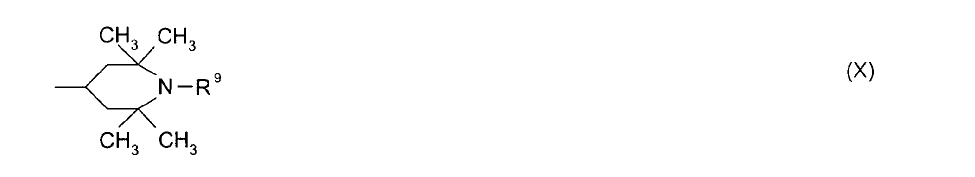 worin einer der Reste R⁷ und R⁸ für Wasserstoff und der andere für Wasserstoff oder eine Methylgruppe steht,
der Rest R⁹ für Wasserstoff oder einen Alkylrest mit 1 bis 16 Kohlenstoffatomen steht,
oder wobei alle Reste R unabhängig voneinander für Wasserstoff oder für einen linearen
oder verzweigten Alkylrest mit 1 bis 18 Kohlenstoffatomen stehen, der eine, zwei oder drei Methoxygruppen oder Ethoxygruppen als Substituenten aufweisen kann,
oder wobei die Reste R für einen Rest der Formel (XI) stehen 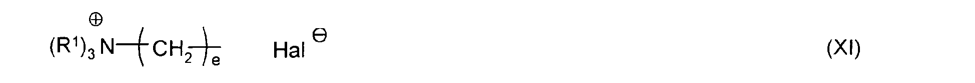 wobei R¹⁰ für einen linearen oder verzweigten Alkylrest mit 1 bis 4 Kohlenstoffatomen steht,
wobei R¹⁰ bevorzugt für eine Methyl- oder eine Ethylgruppe steht, oder
wobei R¹⁰ für Ar oder für Ar-CH₂- steht,
worin e eine Zahl von 2 bis 6 ist,
Hal für Cl oder Br steht,
Ar für den unsubstituierten Phenylrest oder einen unsubstituierten Naphthylrest steht oder für einen Phenylrest, in dem ein oder zwei Wasserstoffatome durch einen Alkylrest mit 1 bis 4 Kohlenstoffatomen substituiert sind,
a den Wert 1, 2 oder 3 besitzt
b den Wert 0, 1 oder 2 besitzt
c1 und c2 unabhängig voneinander den Wert 0 oder 1 besitzen
d eine Zahl von 1 bis 20 ist

2. Siliciumverbindungen nach Anspruch 1, **dadurch gekennzeichnet, dass** die Umsetzung des Silans der Formel (I) mit dem Silan der Formel (II) bei einer Temperatur im Bereich von 40 bis 140°C durchgeführt wird.

3. Siliciumverbindungen nach Anspruch 1 oder 2, **dadurch gekennzeichnet, dass** die Umsetzung des Silans der Formel (I) mit dem Silan der Formel (II) ohne Verwendung eines Lösungsmittels durchgeführt wird.

4. Siliciumverbindungen nach einem oder mehreren der Ansprüche 1 oder 3, **dadurch gekennzeichnet, dass** die Umsetzung des Silans der Formel (I) mit dem Silan der Formel (II) in Gegenwart eines Katalysators durchgeführt wird.

5. Siliciumverbindungen nach Anspruch 4, **dadurch gekennzeichnet, dass** der Katalysator ausgewählt ist aus Natriummethylat oder -ethylat, Zinn (IV) chlorid.

6. Verwendung von Siliciumverbindungen gemäß einem oder mehreren der Ansprüche 1 bis 5 zur Behandlung von Fasermaterialien.

7. Verwendung nach Anspruch 6, **dadurch gekennzeichnet, dass** die Siliciumverbindungen in Form einer Lösung in flüssigem Ammoniak oder in Form einer Lösung oder Dispersion in Wasser eingesetzt werden.

8. Verwendung nach Anspruch 6 oder 7, **dadurch gekennzeichnet, dass** die Siliciumverbindungen zusammen mit Phosphonoeinheiten enthaltenden Silanen eingesetzt werden.

9. Verwendung nach Anspruch 8, **dadurch gekennzeichnet, dass** die Phosphonoeinheiten enthaltenden Silane aus Verbindungen der Formel (XII) ausgewählt sind. 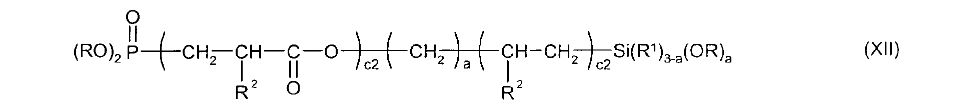 worin R, R¹, R², a und c2 die in Anspruch 1 genannten Bedeutungen besitzen.

10. Verwendung nach Anspruch 8 oder 9, **dadurch gekennzeichnet, dass** die Siliciumverbindungen und die Phosphonoeinheiten enthaltenden Silane in solchen Mengenverhältnissen eingesetzt werden, dass das molare Verhältnis von Stickstoffatomen in den Siliciumverbindungen gemäß einem oder mehreren der Ansprüche 1 bis 5 zu Phosphoratomen in den Silanen der Formel (XII) im Bereich von 1:1 bis 3:1 liegt.

11. Verwendung nach einem oder mehreren der Ansprüche 6 bis 10, **dadurch gekennzeichnet, dass** die Fasermaterialien textile Flächengebilde in Form von Geweben, Maschenwaren oder nonwovens sind.

12. Verwendung nach einem oder mehreren der Ansprüche 6 bis 11, **dadurch gekennzeichnet, dass** die Fasermaterialien aus Cellulose, Polyester, Polyamid, Polypropylen oder aus Mischungen dieser Fasern bestehen.

13. Modifizierte Polyorganosiloxane, herstellbar **dadurch**, dass man Siliciumverbindungen gemäß einem oder mehreren der Ansprüche 1 bis 5 mittels einer Äquilibrierungs- und/oder Kondensationsreaktion mit einem Polyorganosiloxan umsetzt.

14. Modifizierte Polyorganosiloxane nach Anspruch 13, **dadurch gekennzeichnet, dass** das Polyorganosiloxan Trimethylsilyl- oder Hydroxy-Endgruppen besitzt.

15. Modifizierte Polyorganosiloxane nach Anspruch 13 oder 14, **dadurch gekennzeichnet, dass** bei der Äquilibrierungs- bzw. Kondensationsreaktion zusätzlich Silane der Formel (XII) mitverwendet werden.
